# EUROPÄISCHE PATENTSCHRIFT

(11) **EP 2 927 053 B1**
(45) Veröffentlichungstag und Bekanntmachung des Hinweises auf die Patenterteilung: **19.02.2020**
(21) Anmeldenummer: 15000764.9
(22) Anmeldetag: 14.03.2015
(51) Int. Cl.: B60Q 1/24

(54) **BELEUCHTUNGSVORRICHTUNG FÜR EIN KRAFTFAHRZEUG SOWIE DAZUGEHÖRIGES VERFAHREN**
LIGHTING DEVICE FOR A MOTOR VEHICLE AND CORRESPONDING METHOD
DISPOSITIF D'ÉCLAIRAGE POUR UN VÉHICULE AUTOMOBILE ET PROCÉDÉ ASSOCIÉ

(30) Priorität: 31.03.2014 DE 102014004674
(43) Veröffentlichungstag der Anmeldung: 07.10.2015
(73) Patentinhaber: AUDI AG, 85045 Ingolstadt (DE)
(72) Erfinder: Schlittenbauer, Michael, DE - 85055 Ingolstadt (DE)
(74) Vertreter: Thielmann, Frank

(56) Entgegenhaltungen:
- DE-A1- 10 133 511
- DE-A1-102005 017 250
- DE-A1-102005 021 142
- DE-A1-102007 062 472
- DE-A1-102013 009 873
- DE-U1-202013 000 250
- FR-A1- 2 797 422
- US-A1- 2013 002 419

## Beschreibung

Die vorliegende Erfindung betrifft eine Beleuchtungsvorrichtung für ein Kraftfahrzeug mit einer Erfassungseinrichtung zum Erfassen einer Bedienhandlung eines Insassen des Kraftfahrzeugs, einer Leuchteinrichtung zum Beleuchten eines einer Tür des Kraftfahrzeugs zugeordneten Bereichs außerhalb des Kraftfahrzeugs und einer Recheneinrichtung zum Bewerten der erfassten Bedienhandlung und zum Ausgeben eines Steuersignals zum Aktivieren der Leuchteinrichtung in Abhängigkeit von der Bewertung der erfassten Bedienhandlung. Überdies betrifft die vorliegende Erfindung ein Kraftfahrzeug mit einer solchen Beleuchtungsvorrichtung. Schließlich betrifft die vorliegende Erfindung ein Verfahren zum Betreiben einer Beleuchtungsvorrichtung für ein Kraftfahrzeug.

Derartige Beleuchtungsvorrichtungen für Kraftfahrzeuge, die auch als Pfützenbeleuchtung bezeichnet werden, sind aus dem Stand der Technik bekannt. Sie dienen zum Beleuchten eines Raums, der sich seitlich neben dem Kraftfahrzeug befindet. Diese Beleuchtungsvorrichtungen werden beispielsweise aktiviert, falls eine Tür entriegelt wird. Somit kann der Fahrzeuginsasse beim Aussteigen auf eine Pfütze hingewiesen werden.

In diesem Zusammenhang beschreibt die DE 10 2008 063 564 A1 eine Vorrichtung zur Detektion eines Zustands einer Fahrbahnoberfläche für ein Kraftfahrzeug. Die Vorrichtung umfasst wenigstens eine Lichterzeugungseinheit und wenigstens einen Empfänger, der derart im Bereich einer Fahrzeugtür angeordnet ist, dass der Zustand der Fahrbahnoberfläche in einem potenziellen Ausstiegsbereich automatisch detektierbar ist. Auf diese Weise kann unmittelbar vor dem Aussteigen nach dem Öffnen der betreffenden Fahrzeugtür das Vorhandensein einer Pfütze optisch, beispielsweise durch ein Warnlicht, signalisiert werden.

Darüber hinaus ist aus der DE 10 2011 005 967 A1 ein Beleuchtungssystem für ein Kraftfahrzeug bekannt. Dabei ist eine Lichtquelle an der Innenseite jeder Tür eingebaut, um selektiv eine Innenraumbeleuchtung bereitzustellen, wenn die jeweilige Tür geschlossen ist, und eine Pfützenbeleuchtung bereitzustellen, wenn die jeweilige Tür offen steht. Das Beleuchtungssystem umfasst einen Sensor, um zu erfassen, ob die Tür offen oder geschlossen ist, wobei die Lichtquelle automatisch leuchtet, wenn die Tür als offen erfasst wird.

Darüber hinaus beschreibt die DE 10 2006 035 521 A1 ein Kraftfahrzeug umfassend eine in der Seitenverkleidung der Seitentür integrierte Beleuchtungseinrichtung zur Beleuchtung eines türnahen Bereichs außerhalb des Fahrzeugs beim Öffnen der Seitentür. Hierbei weist die Beleuchtungseinrichtung mehrere, entlang der Seitenverkleidung verlaufende Lichtquellen auf. Der Betrieb der Lichtquellen erfolgt über eine geeignete Steuerungseinrichtung, die sämtliche Lichtquellen entsprechend ansteuern kann.

Des Weiteren beschreibt die DE 20 2013 000 250 U1 eine optische und akustische Signalgebung als Ausstiegssicherung bei Personenkraftwagen und Lastkraftwagen. Dabei kann ein Sensor in der Mulde des Entriegelungsgriffs der Innentüren eingebaut sein und ein jeweiliges Signal kann schon kurz vor dem Berühren ausgelöst werden. Der Sensor gibt den Ausstiegssicherungsimpuls an die elektronische Bordeinheit weiter, die dann die komplette Lichtanlage/Blinkereinheit aufblinken lässt.

Zudem ist in der DE 10 2013 009 873 A1 ein Verfahren zum Beleuchten eines Bereichs im Vorfeld und/oder im Innenraum eines Kraftfahrzeugs beschreiben. Hierbei wird die Beleuchtung in Zusammenhang mit dem Entriegeln oder Öffnen bzw. mit dem Schließen oder Verriegeln einer Tür, Klappe oder dergleichen des Kraftfahrzeugs aktiviert.

Schließlich beschreibt die FR 2 797 422 A1 eine Vorrichtung zum Vermeiden einer Kollision für ein Kraftfahrzeug. Hier kann mit einem Sensor eine Berührung oder eine Annäherung einer Hand an einen inneren Türgriff erkannt werden. Ferner kann eine Bewegung einer Person in dem Kraftfahrzeug erkannt werden, wobei die Bewegung einen Beginn einer Betätigung des inneren Türgriffs beschreibt. Zudem kann ein Warnsignal ausgegeben werden. Es ist Aufgabe der vorliegenden Erfindung, eine Beleuchtungsvorrichtung für ein Kraftfahrzeug bereitzustellen, mittels welcher die Sicherheit im Straßenverkehr erhöht werden kann.

Diese Aufgabe wird durch eine Beleuchtungsvorrichtung mit den Merkmalen des Patentanspruchs 1, durch ein Kraftfahrzeug mit den Merkmalen des Patentanspruchs 4 sowie durch ein Verfahren mit den Merkmalen des Patentanspruchs 8 gelöst. Vorteilhafte Weiterbildungen der vorliegenden Erfindung sind Gegenstand der abhängigen Ansprüche.

Die erfindungsgemäße Beleuchtungsvorrichtung für ein Kraftfahrzeug umfasst eine Erfassungseinrichtung zum Erfassen einer Bedienhandlung eines Insassen des Kraftfahrzeugs, eine Leuchteinrichtung zum Beleuchten eines einer Tür des Kraftfahrzeugs zugeordneten Bereichs außerhalb des Kraftfahrzeugs und eine Recheneinrichtung zum Bewerten der erfassten Bedienhandlung und zum Ausgeben eines Steuersignals zum Aktivieren der Leuchteinrichtung in Abhängigkeit von der Bewertung der erfassten Bedienhandlung, wobei die Recheneinrichtung dazu ausgebildet ist, das Steuersignal auszugeben, falls die erfasste Bedienhandlung als eine Annäherung eines Körperteils des Insassen an ein Bedienelement zum Öffnen der Tür und/oder als Berührung des Bedienelements durch das Körperteil bewertet ist.

Die Beleuchtungsvorrichtung umfasst eine Erfassungseinrichtung, mit der Bedienhandlungen zumindest eines Insassen des Kraftfahrzeugs erfasst werden können. Beispielsweise können Bedienhandlungen, die mit einer Hand oder einem Arm des Insassen ausgeführt werden, erfasst werden. Mit einer Recheneinrichtung können die erfassten Bedienhandlungen entsprechend bewertet werden. Zu diesem Zweck können beispielsweise vorbestimmte Bedienhandlungen auf einer Speichereinrichtung der Recheneinrichtung hinterlegt sein. Die erfasste Bedienhandlung kann mit der vorbestimmten Bedienhandlung verglichen werden. In Abhängigkeit von der Bewertung der erfassten Bedienhandlung kann mit der Recheneinrichtung ein Steuersignal ausgegeben werden. Das Steuersignal dient zum Ansteuern einer Leuchteinrichtung des Kraftfahrzeugs. Die Leuchteinrichtung dient zum Beleuchten eines Bereichs außerhalb des Kraftfahrzeugs, der beispielsweise einer Tür des Kraftfahrzeugs zugeordnet ist. Dabei ist es auch denkbar, dass die Beleuchtungseinrichtung mehrere Leuchteinrichtungen umfasst. Dabei kann jede der Leuchteinrichtungen einem einer Seitentür zugeordneten Bereich außerhalb des Kraftfahrzeugs zugeordnet sein. Insbesondere kann mit der Leuchteinrichtung ein Bereich des Bodens neben dem Kraftfahrzeug beleuchtet werden, den der Insasse beim Aussteigen üblicherweise betritt.

Die Recheneinrichtung ist nun dazu ausgebildet, anhand der erfassten Bedienhandlung zu erkennen, ob sich der Insasse mit zumindest einem Körperteil einem Bedienelement zum Öffnen der Tür nähert. Alternativ oder zusätzlich kann die Recheneinrichtung erkennen, ob der Insasse das Bedienelement zum Öffnen der Tür berührt. Falls eine Annäherung an das Bedienelement und/oder eine Berührung des Bedienelements erkannt wird, wird ein entsprechendes Steuersignal an die Leuchteinrichtung ausgegeben, infolge dessen die Leuchteinrichtung aktiviert beziehungsweise eingeschaltet wird. Somit kann die Leuchteinrichtung beziehungsweise die Pfützenbeleuchtung bereits zu dem Zeitpunkt aktiviert werden, zu dem ein Ausstiegswunsch des Insassen des Kraftfahrzeugs erkannt wird. Damit wird dem Insassen bereits beim Ausstiegswunsch eine Einsicht der Umgebung ermöglicht. Darüber hinaus wird eine mögliche Warnung für die übrigen Verkehrsteilnehmer bereitgestellt, dass sich die Tür des Kraftfahrzeugs öffnet. Auf diese Weise kann die Sicherheit im Straßenverkehr erhöht werden.

Zudem umfasst die Erfassungseinrichtung zumindest einen optischen Sensor, der in dem Innenraum des Kraftfahrzeugs angeordnet ist. Der optische Sensor kann beispielsweise als Kamera ausgebildet sein, die in einem Dachhimmel angeordnet ist. Somit kann optisch erfasst werden, ob sich ein Arm und/oder eine Hand dem Bedienelement zum Öffnen der Tür nähern und/oder ob eine Berührung des Bedienelements erfolgt. Mit einer Kamera kann der Ausstiegswunsch zuverlässig erkannt werden.

Des Weiteren ist der zumindest eine optische Sensor dazu ausgebildet, als die Bedienhandlung eine räumliche Lage eines Arms und/oder einer Hand des Insassen zu erfassen. Zu diesem Zweck kann der optische Sensor als Fotomischdetektor beziehungsweise PMD-Sensor ausgebildet sein. Ein derartiger optischer Sensor kann basierend auf dem Lichtlaufzeitverfahren (Time of Flight) die räumliche Lage zumindest eines Körperteils des Insassen erfassen. Alternativ dazu kann der optische Sensor als Stereokamera ausgebildet sein. Auf diese Weise kann die Bedienhandlung zuverlässig erfasst werden.

Darüber hinaus ist die Recheneinrichtung dazu ausgebildet, zum Bewerten der erfassten Bedienhandlung die mit dem zumindest einen optischen Sensor erfasste räumliche Lage des Arms und/oder der Hand mit einem in der Recheneinrichtung hinterlegten Körpermodell zu vergleichen. In dem Körpermodell kann beispielsweise die Lage der Arme und der Hände in Bezug zum Oberkörper berücksichtigt sein. Das Körpermodell kann auch mehrere Positionen der Arme und/oder Hände bezüglich des Oberkörpers umfassen, anhand der auf einen Ausstiegswunsch des Fahrers rückgeschlossen werden kann. Somit kann der Ausstiegswunsch zuverlässig erkannt werden.

Weiterhin ist es vorteilhaft, wenn die Recheneinrichtung dazu ausgebildet ist, beim Auswerten der erfassten Bedienhandlung zusätzlich eine Geschwindigkeit des Kraftfahrzeugs, einen Zustand eines Gurtschlosses und/oder einen Zustand einer Zündung zu berücksichtigen. Wenn mit der Recheneinrichtung ein Ausstiegswunsch des Insassen erkannt wird, kann dieser anhand eines Zustands eines Gurtschlosses plausibilisiert werden. Alternativ oder zusätzlich kann der Zustand einer Zündung beziehungsweise der Klemme 15 berücksichtigt werden. Weiterhin kann berücksichtigt werden, ob das Kraftfahrzeug steht. Auf diese Weise kann der Ausstiegswunsch zuverlässig erkannt werden.

In einer weiteren Ausgestaltung ist die Leuchteinrichtung mittels der Recheneinrichtung zum Bereitstellen eines vorbestimmten Leuchtmusters ansteuerbar. Beispielsweise kann die Leuchteinrichtung mittels der Recheneinrichtung derart angesteuert werden, dass mit der Leuchteinrichtung ein Blinklicht bereitgestellt wird. Somit können andere Verkehrsteilnehmer besonders zuverlässig davor gewarnt werden, dass eine Tür des Kraftfahrzeugs geöffnet wird.

Das erfindungsgemäße Kraftfahrzeug umfasst die erfindungsgemäße Beleuchtungsvorrichtung.

Bevorzugt ist die Erfassungseinrichtung innerhalb des Kraftfahrzeugs zentral an einem Dachmodul angeordnet. Die Erfassungseinrichtung kann beispielsweise an einem Dachhimmel angeordnet sein. Insbesondere ist die Erfassungseinrichtung derart angeordnet, dass sie Bedienhandlungen des Fahrers und des Beifahrers erfassen kann. Die Erfassungseinrichtung kann auch so an dem Dachmodul positioniert sein, dass sie Bedienhandlungen von Fahrzeuginsassen auf allen vorhandenen Sitzplätzen erfassen kann. Durch eine derartige Anordnung der Erfassungseinrichtung können Bedienhandlungen und/oder Gesten der Fahrzeuginsassen zuverlässig erfasst werden.

In einer Ausgestaltung ist die Erfassungseinrichtung in und/oder an dem Bedienelement zum Öffnen der Tür angeordnet. Das Bedienelement zum Öffnen der Tür kann beispielsweise als Türgriff ausgebildet sein. Die Erfassungseinrichtung kann in dem Türgriff und/oder an der Oberfläche des Türgriffs angeordnet sein. Darüber hinaus ist denkbar, dass die Erfassungseinrichtung in einem dem Bedienelement zugeordneten Bereich angeordnet ist. Die Erfassungseinrichtung kann beispielsweise als optischer Sensor oder als kapazitiver Sensor ausgebildet sein. Mit der Erfassungseinrichtung kann eine Annäherung einer Hand an den Türgriff oder eine Berührung des Türgriffs erfasst werden. Auf diese Weise kann der Ausstiegswunsch zuverlässig erfasst werden.

Bevorzugt ist die Leuchteinrichtung in einem Bereich des äußeren Türgriffs der Tür angeordnet. Alternativ dazu kann die Leuchteinrichtung in einem Bereich des Unterbodens des Kraftfahrzeugs oder in einem Außenspiegel des Kraftfahrzeugs integriert sein.

Das erfindungsgemäße Verfahren zum Betreiben einer Beleuchtungsvorrichtung für ein Kraftfahrzeug umfasst das Erfassen einer Bedienhandlung eines Insassen des Kraftfahrzeugs, das Bereitstellen einer Leuchteinrichtung zum Beleuchten eines einer Tür des Kraftfahrzeugs zugeordneten Bereichs außerhalb des Kraftfahrzeugs, das Bewerten der erfassten Bedienhandlung und das Ausgeben eines Steuersignals zum Aktivieren der Leuchteinrichtung in Abhängigkeit von der Bewertung der erfassten Bedienhandlung, wobei das Steuersignal ausgegeben wird, falls die erfasste Bedienhandlung als eine Annäherung eines Körperteils des Insassen an ein Bedienelement zum Öffnen der Tür und/oder als Berührung des Bedienelements durch das Körperteil bewertet wird, wobei als die Bedienhandlung eine räumliche Lage eines Arms und/oder einer Hand des Insassen mit zumindest einem optischen Sensor der Erfassungseinrichtung erfasst wird, und mit der Recheneinrichtung zum Bewerten der erfassten Bedienhandlung die mit dem zumindest einen optischen Sensor erfasste räumliche Lage des Arms und/oder der Hand mit einem in der Recheneinrichtung hinterlegten Körpermodel verglichen wird.

Die zuvor im Zusammenhang mit der erfindungsgemäßen Beleuchtungsvorrichtung beschriebenen Vorteile und Weiterbildungen gelten sinngemäß für das erfindungsgemäße Kraftfahrzeug und das erfindungsgemäße Verfahren.

Die vorliegende Erfindung wird nun anhand der beigefügten Zeichnungen näher erläutert. Dabei zeigen:
- Fig. 1: eine schematische Darstellung einer Beleuchtungsvorrichtung für ein Kraftfahrzeug; und
- Fig. 2: ein Körpermodell, das in einer Recheneinrichtung der Beleuchtungsvorrichtung hinterlegt ist.

Die nachfolgend näher geschilderten Ausführungsbeispiele stellen bevorzugte Ausführungsformen der vorliegenden Erfindung dar.

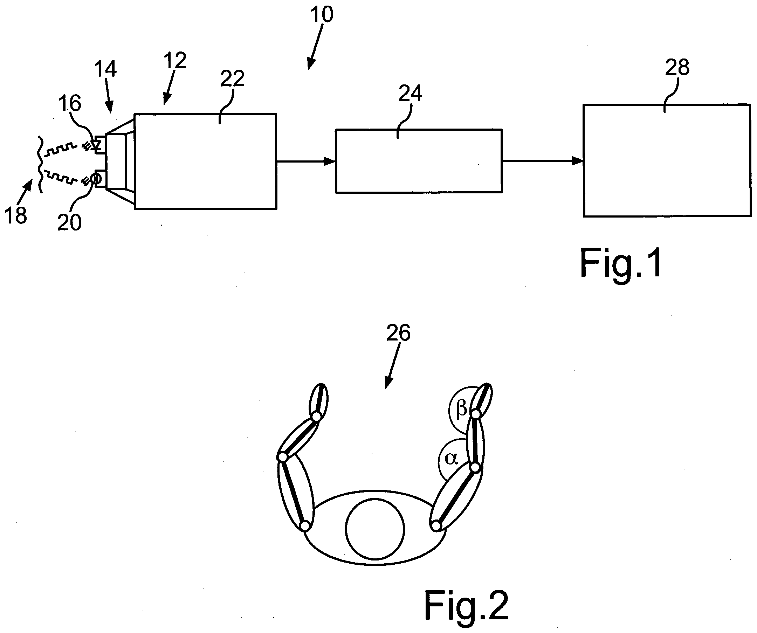

Fig. 1 zeigt eine Beleuchtungsvorrichtung 10 für ein Kraftfahrzeug in einer schematischen Darstellung. Die Beleuchtungsvorrichtung 10 umfasst eine Erfassungseinrichtung 12. Die Erfassungseinrichtung 12 ist dazu ausgebildet, eine Bedienhandlung eines Insassen im Innenraum des Kraftfahrzeugs zu erfassen. Als Bedienhandlung kann mit der Erfassungseinrichtung 12 erfasst werden, dass ein Insasse 18 des Kraftfahrzeugs ein Bedienelement zum Öffnen einer Tür des Kraftfahrzeugs betätigen möchte. So kann mit der Erfassungseinrichtung 12 erkannt werden, ob sich der Insasse 18 mit zumindest einem Körperteil dem Bedienelement nähert. Alternativ oder zusätzlich kann mit der Erfassungseinrichtung 12 erkannt werden, ob der Insasse 18 mit einem Körperteil das Bedienelement berührt beziehungsweise betätigt. Bei dem Bedienelement zum Öffnen der Tür handelt es sich insbesondere um einen Türgriff im Innenraum des Kraftfahrzeugs.

Erfindungsgemäß umfasst die Erfassungseinrichtung 12 einen optischen Sensor 14. Der optische Sensor 14 umfasst wiederum einen Sender 16, der beispielsweise als Lichtquelle oder Fotodiode ausgebildet ist. Der Sender 16 kann elektromagnetische Strahlung aussenden. Diese Strahlung wird von dem Insassen 18, der vorliegend nur schematisch dargestellt ist, reflektiert. Die reflektierte Strahlung wird von einem Empfänger 20 des optischen Sensors 14 empfangen. Des Weiteren umfasst die Erfassungseinrichtung 12 eine Auswerteeinheit 22, mit der die Messdaten des optischen Sensors 14 bearbeitet werden können. Beispielsweise kann mit der Auswerteeinheit 22 die Laufzeit der elektromagnetischen Strahlung ermittelt werden. Auf diese Weise kann mit der Erfassungseinrichtung 12 anhand der Laufzeit eine räumliche Lage zumindest eines Körperteils des Insassen 18 erfasst werden.

Die Erfassungseinrichtung 12 ist im Innenraum des Kraftfahrzeugs angeordnet. Bevorzugt ist die Erfassungseinrichtung 12 zentral in einem Dachmodul des Kraftfahrzeugs verbaut. Somit können die Bedienhandlungen der Fahrzeuginsassen zuverlässig erfasst werden. Alternativ oder zusätzlich kann die Erfassungseinrichtung 12 in einem Bereich des Türgriffs oder in dem Türgriff direkt angeordnet sein. Auf diese Weise kann erfasst werden, ob ein Fahrzeuginsasse sich mit seiner Hand dem Türgriff nähert oder den Türgriff berührt.

Die mit der Erfassungseinrichtung 12 erfasste Bedienhandlung wird an eine Recheneinrichtung 24 übertragen. Die Recheneinrichtung 24 ist dazu ausgebildet, die mit der Erfassungseinrichtung 12 erfasste Bedienhandlung des Insassen 18 zu bewerten. Insbesondere kann mit der Recheneinrichtung 24 erkannt werden, ob sich der Insasse einem Bedienelement zum Öffnen der Tür nähert und/oder ob der Insasse das Bedienelement berührt. Auf diese Weise kann mit der Recheneinrichtung 24 ein Ausstiegswunsch des Fahrers erkannt werden.

Zur Bewertung der erfassten Bedienhandlung ist auch ein Körpermodell 26 in einer Speichereinheit der Recheneinrichtung 24 hinterlegt. In dem Körpermodell kann beispielsweise ein Winkel α zwischen einem Oberarm und einem Unterarm des Insassen 18 sowie ein Winkel β zwischen dem Unterarm und der Hand des Insassen berücksichtigt werden. Zudem kann die räumliche Lage des Oberarms, des Unterarms und/oder der Hand in dem Körpermodell berücksichtigt werden. Die erfasste Bedienhandlung kann mit dem Körpermodell verglichen werden. Falls der Winkel α zwischen einem Oberarm und einem Unterarm des Insassen 18 und/oder der Winkel β zwischen dem Unterarm und der Hand Anhand bzw. die räumlichen Lage des Arms und/oder der Hand einen vorbestimmten Wert einnimmt, kann auf einen Ausstiegswunsch des Insassen rückgeschlossen werden.

Der Ausstiegswunsch, der mit der Recheneinrichtung 24 erkannt wird, kann zusätzlich plausibilisiert werden. Zu diesem Zweck kann beispielsweise der Zustand eines Gurtschlosses herangezogen werden. Alternativ oder zusätzlich kann der Zustand der Klemme 15 des Kraftfahrzeugs berücksichtigt werden. Weiterhin kann berücksichtigt werden, ob das Kraftfahrzeug steht oder fährt. Auf diese Weise kann der Ausstiegswunsch des Fahrers zuverlässig erkannt werden.

Sobald mit der Recheneinrichtung 24 der Ausstiegswunsch des Fahrers erkannt wird, wird ein entsprechendes Steuersignal an eine Leuchteinrichtung 28 des Kraftfahrzeugs übermittelt. Die Leuchteinrichtung 28 kann beispielsweise in einem Bereich des äußeren Türgriffs des Kraftfahrzeugs angeordnet sein. Infolge des Steuersignals, das von der Recheneinrichtung 24 ausgesendet wird, wird die Leuchteinrichtung aktiviert beziehungsweise eingeschaltet. Somit kann ein Bereich außerhalb des Kraftfahrzeugs, der beispielsweise eine Seitentür des Kraftfahrzeugs zugeordnet ist, bereits vor dem Öffnen der Seitentür beleuchtet werden. Dies ermöglicht dem Fahrer eine Einsicht in die Umgebung des Kraftfahrzeugs bereits vor dem Aussteigen. Somit kann der Insasse 18 des Kraftfahrzeugs beispielsweise auf Pfützen hingewiesen werden. Zusätzlich können weitere Verkehrsteilnehmer entsprechend gewarnt werden, dass ein Öffnen der Tür des Kraftfahrzeugs bevorsteht.

Mit der Beleuchtungsvorrichtung 10 kann dem Insassen 18 bereits vor dem Öffnen der Tür ein verbesserter Einblick in den Bereich neben der Tür ermöglicht werden. Zudem können herannahende Verkehrsteilnehmer vor dem Öffnen der Tür gewarnt werden. Zu diesem Zweck kann mit der Leuchteinrichtung 28 der Beleuchtungsvorrichtung 10 beispielsweise ein Blinklicht bereitgestellt werden. Auf diese Weise kann die Sicherheit im Straßenverkehr erhöht werden.

## Patentansprüche

1. Beleuchtungsvorrichtung (10) für ein Kraftfahrzeug mit
- einer Erfassungseinrichtung (12) zum Erfassen einer Bedienhandlung eines Insassen (18) des Kraftfahrzeugs,
- einer Leuchteinrichtung (28) zum Beleuchten eines einer Tür des Kraftfahrzeugs zugeordneten Bereichs außerhalb des Kraftfahrzeugs und
- einer Recheneinrichtung (24) zum Bewerten der erfassten Bedienhandlung und zum Ausgeben eines Steuersignals zum Aktivieren der Leuchteinrichtung (28) in Abhängigkeit von der Bewertung der erfassten Bedienhandlung, wobei
- die Recheneinrichtung (24) dazu ausgebildet ist, das Steuersignal auszugeben, falls die erfasste Bedienhandlung als eine Annäherung eines Körperteils des Insassen (18) an ein Bedienelement zum Öffnen der Tür und/oder als Berührung des Bedienelements durch das Köperteil bewertet ist,
**dadurch gekennzeichnet, dass**
- die Erfassungseinrichtung (12) zumindest einen optischen Sensor (14) umfasst, welcher dazu ausgebildet ist, als die Bedienhandlung eine räumliche Lage eines Arms und/oder einer Hand des Insassen zu erfassen und
- Recheneinrichtung (24) dazu ausgebildet ist, zum Bewerten der erfassten Bedienhandlung die mit dem zumindest einen optischen Sensor (14) erfasste räumliche Lage des Arms und/oder der Hand mit einem in der Recheneinrichtung (24) hinterlegten Körpermodel zu vergleichen.

2. Beleuchtungsvorrichtung (10) nach Anspruch 1,
**dadurch gekennzeichnet, dass**
die Recheneinrichtung (24) dazu ausgebildet ist, beim Auswerten der erfassten Bedienhandlung zusätzlich eine Geschwindigkeit des Kraftfahrzeugs, einen Zustand eines Gurtschlosses und/oder einen Zustand einer Zündung zu berücksichtigen.

3. Beleuchtungsvorrichtung (10) nach einem der vorhergehenden Ansprüche,
**dadurch gekennzeichnet, dass**
die Leuchteinrichtung (28) mittels der Recheneinrichtung (24) zum Bereitstellen eines vorbestimmten Leuchtmusters ansteuerbar ist.

4. Kraftfahrzeug mit einer Beleuchtungsvorrichtung (10) nach einem der vorhergehenden Ansprüche.

5. Kraftfahrzeug nach Anspruch 4,
**dadurch gekennzeichnet, dass**
die Erfassungseinrichtung (12) innerhalb des Kraftfahrzeugs zentral an einem Dachmodul angeordnet ist.

6. Kraftfahrzeug nach Anspruch 4,
**dadurch gekennzeichnet, dass**
die Erfassungseinrichtung (12) in und/oder an dem Bedienelement zum Öffnen der Tür angeordnet ist.

7. Kraftfahrzeug nach einem der Ansprüche 4 bis 6,
**dadurch gekennzeichnet, dass**
die Leuchteinrichtung in einem Bereich eines äußeren Türgriffs der Tür angeordnet ist.

8. Verfahren zum Betreiben einer Beleuchtungsvorrichtung (10) für ein Kraftfahrzeug durch
- Erfassen einer Bedienhandlung eines Insassen des Kraftfahrzeugs,
- Bereitstellen einer Leuchteinrichtung (28) zum Beleuchten eines einer Tür des Kraftfahrzeugs zugeordneten Bereichs außerhalb des Kraftfahrzeugs,
- Bewerten der erfassten Bedienhandlung und das Ausgeben eines Steuersignals zum Aktivieren der Leuchteinrichtung (28) in Abhängigkeit von der Bewertung der erfassten Bedienhandlung, wobei
- das Steuersignal ausgeben wird, falls die erfasste Bedienhandlung als eine Annäherung eines Körperteils des Insassen an ein Bedienelement zum Öffnen der Tür und/oder als Berührung des Bedienelements durch das Köperteil bewertet wird,
**dadurch gekennzeichnet, dass**
- als die Bedienhandlung eine räumliche Lage eines Arms und/oder einer Hand des Insassen mit zumindest einem optischen Sensor (14) der Erfassungseinrichtung (12) erfasst wird, und mit der Recheneinrichtung (24) zum Bewerten der erfassten Bedienhandlung die mit dem zumindest einen optischen Sensor (14) erfasste räumliche Lage des Arms und/oder der Hand mit einem in der Recheneinrichtung (24) hinterlegten Körpermodel verglichen wird.

## Claims

1. Lighting device (10) for a motor vehicle having
- a detecting means (12) for detecting an operating action of an occupant (18) of the motor vehicle,
- a lighting means (28) for illuminating a region outside the motor vehicle, said region being associated with a door of the motor vehicle, and
- a computing means (24) for evaluating the detected operating action and for outputting a control signal for activating the lighting means (28) in dependence on the evaluation of the detected operating action, wherein
- the computing means (24) is designed to output the control signal if the detected operating action is evaluated as an approach of a body part of the occupant (18) to an operating element for opening the door and/or as a touch of the operating element by the body part,
**characterised in that**
- the detecting means (12) comprises at least one optical sensor (14) which is designed to detect, as the operating action, a spatial position of an arm and/or a hand of the occupant, and
- computing means (24) is designed for evaluating the detected operating action to compare the spatial position of the arm and/or the hand detected by at least one optical sensor (14) to a body model stored in the computing means (24).

2. Lighting device (10) according to claim 1,
**characterised in that**
the computing means (24) is designed to additionally take into account a speed of the motor vehicle, a state of a seatbelt buckle and/or a state of ignition when evaluating the detected operating action.

3. Lighting device (10) according to any of the preceding claims,
**characterised in that**
the lighting means (28) can be controlled using the computing means (24) for providing a predetermined lighting pattern.

4. Motor vehicle having a lighting device (10) according to any of the preceding claims.

5. Motor vehicle according to claim 4,
**characterised in that**
the detecting means (12) is arranged centrally on a roof module within the motor vehicle.

6. Motor vehicle according to claim 4,
**characterised in that**
the detecting means (12) is arranged in and/or on the operating element for opening the door.

7. Motor vehicle according to any of claims 4 to 6,
**characterised in that**
the lighting means is arranged in a region of an outer door handle of the door.

8. Method for operating a lighting device (10) for a motor vehicle by
- detecting an operating action of an occupant of the motor vehicle,
- providing a lighting means (28) for illuminating a region outside the motor vehicle, said region being associated with a door of the motor vehicle,
- evaluating the detected operating action and outputting a control signal for activating the lighting means (28) in dependence on the evaluation of the detected operating action, wherein
- the control signal is output if the detected operating action is evaluated as an approach of a body part of the occupant to an operating element for opening the door and/or as a touch of the operating element by the body part,
**characterised in that**
- as the operating action, a spatial position of an arm and/or a hand of the occupant is detected with at least one optical sensor (14) of the detecting means (12), and the spatial position of the arm and/or the hand detected with the at least one optical sensor (14) is compared to a body model stored in the computing means (24) using the computing means (24) for evaluating the detected operating action.

## Revendications

1. Dispositif d'éclairage (10) pour un véhicule automobile avec
- un dispositif de détection (12) pour la détection d'une opération de commande d'un occupant (18) du véhicule automobile,
- un système d'éclairage (28) pour l'éclairage d'une zone associée à une porte du véhicule automobile en dehors du véhicule automobile et
- un dispositif de calcul (24) pour l'exploitation de l'opération de commande détectée et pour l'émission d'un signal de commande pour l'activation du système d'éclairage (28) en fonction de l'exploitation de l'opération de commande détectée, dans lequel
- le dispositif de calcul (24) est réalisé pour émettre le signal de commande, si l'opération de commande détectée est considérée comme une approche d'une partie du corps de l'occupant (18) d'un élément de commande pour l'ouverture de la porte et/ou comme un contact de l'élément de commande par la partie de corps,
**caractérisé en ce que**
- le dispositif de détection (12) comprend au moins un capteur optique (14), lequel est réalisé pour détecter en tant qu'opération de commande une position spatiale d'un bras et/ou d'une main de l'occupant et
- le dispositif de calcul (24) est réalisé pour comparer pour l'exploitation de l'opération de commande détectée, la position spatiale du bras et/ou de la main détectée avec l'au moins un capteur optique (14) avec un modèle de corps enregistré dans le dispositif de calcul (24).

2. Dispositif d'éclairage (10) selon la revendication 1,
**caractérisé en ce que**
le dispositif de calcul (24) est réalisé pour tenir compte lors de l'évaluation de l'opération de commande détectée en plus d'une vitesse du véhicule, d'un état d'une boucle de ceinture et/ou d'un état d'un allumage.

3. Dispositif d'éclairage (10) selon l'une quelconque des revendications précédentes,
**caractérisé en ce que**
le système d'éclairage (28) peut être commandé au moyen du dispositif de calcul (24) pour la mise à disposition d'un motif d'éclairage prédéterminé.

4. Véhicule automobile avec un dispositif d'éclairage (10) selon l'une quelconque des revendications précédentes.

5. Véhicule automobile selon la revendication 4.
**caractérisé en ce que**
le dispositif de détection (12) est agencé à l'intérieur du véhicule automobile centralement au niveau d'un module de toit.

6. Véhicule automobile selon la revendication 4.
**caractérisé en ce que**
le dispositif de détection (12) est agencé dans et/ou au niveau de l'élément de commande pour l'ouverture de la porte.

7. Véhicule automobile selon l'une quelconque des revendications 4 à 6.
**caractérisé en ce que**
le dispositif d'éclairage est agencé dans une zone d'une poignée de porte extérieure de la porte.

8. Procédé de fonctionnement d'un dispositif d'éclairage (10) pour un véhicule automobile par
- détection d'une opération de commande d'un occupant du véhicule automobile,
- mise à disposition d'un système d'éclairage (28) pour l'éclairage d'une zone associée à une porte du véhicule automobile en dehors du véhicule automobile,
- exploitation de l'opération de commande détectée et l'émission d'un signal de commande pour l'activation du système d'éclairage (28) en fonction de l'exploitation de l'opération de commande détectée, dans lequel
- le signal de commande est émis, si l'opération de commande détectée est considérée comme une approche d'une partie du corps de l'occupant d'un élément de commande pour l'ouverture de la porte et/ou comme un contact de l'élément de commande par la partie de corps,
**caractérisé en ce que**
- une position spatiale d'un bras et/ou d'une main de l'occupant est détectée en tant qu'opération de commande avec au moins un capteur optique (14) du dispositif de détection (12), et avec le dispositif de calcul (24) pour l'exploitation de l'opération de commande détectée, la position spatiale du bras et/ou de la main détectée avec l'au moins un capteur optique (14) est comparée avec un modèle de corps enregistré dans le dispositif de calcul (24).
